# EUROPEAN PATENT APPLICATION

(11) **EP 2 911 255 A1**
(43) Date of publication of application: **26.08.2015**
(21) Application number: 14155791.8
(22) Date of filing: 19.02.2014
(51) Int. Cl.: H02G 15/072, H01B 17/28

(54) **High voltage lead-through device and method of manufacturing the same**

(71) Applicant: ABB Technology Ltd, 8050 Zürich (CH)
(72) Inventor: Forssen, Cecilia, SE-724 60 Västerås (SE); Penayo, Francisco, SE-771 50 Ludvika (SE); Faleke, Håkan, SE-722 31 Västerås (SE); Martini, Harald, SE-722 18 Västerås (SE); Schiessling, Joachim, SE-749 42 Enköping (SE); Lavesson, Nils, SE-723 48 Västerås (SE); Hedlund, Roger, SE-771 92 Ludvika (SE); Sjöberg, Peter, 771 43 Ludvika (SE)
(74) Representative: Savela, Reino Aleksi

(57) **Abstract**

A high voltage lead-through device (1) comprising a conductor (7), and a non-impregnable film (9) wound around the conductor (7) thus forming a condenser core (5), wherein the non-impregnable film has a surface comprising a plurality of regions (9a) provided with a conductive compound (11), wherein each region (9a) provided with the conductive compound (11) forms a respective conductive layer of the condenser core (5). A method of manufacturing such a high voltage lead-through device is also disclosed herein.

## Description

### TECHNICAL FIELD

The present disclosure generally relates to high voltage electrical equipment. In particular, it relates to a high voltage lead-through device having a condenser core comprising a non-impregnable film and to a method of manufacturing such a high voltage lead-through device.

### BACKGROUND

Lead-through devices, such as bushings, cable terminations and instrument transformers, are used for leading a high voltage conductor through a medium which has a different electric potential than the high voltage conductor. In the case of a bushing for example, a high voltage conductor is lead through a wall. The dimensions of high voltage electrical equipment at the interface between the high voltage conductor and the medium may thereby be kept smaller than would otherwise be possible.

In order to obtain a more evenly distributed electric field along the lead-through device body, the lead-through device may comprise a capacitive field grading arrangement, i.e. a condenser core. This arrangement comprises a plurality of conductive layers electrically insulated from each other and extending longitudinally along the lead-through device body. In order to improve the electrical withstand strength, the axial length of each conductive layer is shorter than that of the corresponding insulation layers between which a conductive layer is sandwiched.

Traditionally, the condenser core has been made of cellulose-based material such as paper which define the insulating layers and aluminium foils arranged along regions of the cellulose-based material and which define the conductive layers. The cellulose-based material and aluminium foils are wound together around a conductor. The cellulose-based material is then dried, wherein the arrangement is subjected to impregnation by means of epoxy impregnation in a vacuum chamber. Finally, the epoxy is cured and the condenser core is thus obtained.

Utilising cellulose-based material as base for the condenser core body may thus be cumbersome and requires a plurality of manufacturing steps in order to obtain a lead-through device.

WO2007/071096 discloses a bushing which has a condenser core that instead of a cellulose-based material comprises polymer film which has been metalized by means of vapour deposition to thereby obtain conductive layers. As a result thinner conductive layers than what is possible by means of e.g. aluminium foil can be obtained. Utilising a polymer film instead of cellulose-based material is advantageous in that the drying step may be discarded in the manufacturing process. By obtaining thinner conductive layer air pockets at the ends of the conductive layers created between the films sandwiching each conductive layer become thinner/smaller.

Metallization applied by vapour deposition on polymer film however tend to evaporate in the presence of partial discharge. For lead-through devices, where partial discharge is most likely at the edges of the conductive layers, this would mean that the conductive layers would be consumed slowly resulting in less advantageous electrical field distribution along the lead-through device body.

### SUMMARY

An object of the present disclosure is to provide a lead-through device and a method of manufacturing a lead-through device which solves or at least mitigates existing problems of the state of the art.

Hence, according to a first aspect of the present disclosure there is provided a high voltage lead-through device comprising: a conductor, and a non-impregnable film wound around the conductor thus forming a condenser core, wherein the non-impregnable film has a surface comprising a plurality of regions provided with a conductive compound, wherein each region provided with the conductive compound forms a respective conductive layer of the condenser core.

With a conductive compound is meant a mixture comprising at least two components/substances, and which mixture is conductive. Especially, the conductive compound has a higher conductivity than the non-impregnable film.

With non-impregnable film is meant a film which is unable or essentially unable to absorb liquid. A non-impregnable film could thus either be a material which inherently is unable or essentially unable to absorb a liquid or a material that has been pre-impregnated and which has thus reached a non-impregnable state.

According to one embodiment each region of conductive compound has a thickness in the range 500 nm to 5 µm. An effect obtainable thereby is that a thicker conductive layer may be obtained than what would be economically feasible utilising vapour deposition of a metallic material. The risk of evaporation following partial discharge may thereby be eliminated or at least reduced.

According to one embodiment an outermost conductive layer of the condenser core has a lower surface resistivity than an innermost conductive layer of the condenser core. The outermost conductive layer may be connected to the same electric potential as the medium through which the high voltage lead-through device extends when installed. By providing the outermost conductive layer with a lower surface resistivity than the inner conductive layers, for example the innermost conductive layer, electrical charges may be lead away from the outermost layer in a more efficient manner.

According to one embodiment the non-impregnable film is a polymer film.

According to one embodiment the conductive compound is a conductive ink.

According to one embodiment the conductive compound has a surface resistivity in the range 10 Ohm per square to 10 000 Ohm per square. By means of a surface resistivity in this range, i.e. corresponding to a conductivity in the range 10⁻⁴ Siemens to 0.1 Siemens, which is lower than that obtainable by metallization and foils, a more robust lead-through device may be provided. In particular, the specified range of conductivity provides for a more robust lead-through device when handling transients, which could otherwise damage the lead-through device.

According to one embodiment the high voltage lead-through device is one of a bushing, a cable termination and an instrument transformer.

According to a second aspect of the present disclosure there is provide a method of manufacturing a high voltage lead-through device, wherein the method comprises:
a) winding a non-impregnable film around a conductor, the non-impregnable film having a surface comprising a plurality of regions provided with a conductive compound, forming a plurality of conductive layers when the non-impregnable film has been wound around the conductor to obtain a condenser core.

One embodiment comprises printing the conductive compound onto the non-impregnable film. By means of printing technology, the conductive compound can be applied with high precision in a simple manner, both with regards to its thickness and its shape on the surface of the non-impregnable film.

According to one embodiment the conductive compound is printed onto the non-impregnable film during step a) of winding. The conductive compound could alternatively be applied to the non-impregnable film before step a) of winding the non-impregnable film around the conductor. By means of printing it is possible to in an economical manner provide a conductive compound coating onto the surface of the non-impregnable film. Especially, it is possible to apply a conductive compound with a thickness that is greater than what could be feasible to achieve by means of vapour deposition.

According to one embodiment an outermost conductive layer of the condenser core has a lower surface resistivity than an innermost conductive layer of the condenser core. By means of printing technology, it is possible to individually adapt the surface resistivity of each conductive layer in a simple manner. This may for example be controlled during the step of printing by controlling the thickness of the conductive compound applied to the non-impregnable film. The thicker the layer of conductive compound applied to the non-impregnable film is, the lower the surface resistivity, and the higher the conductivity. Alternatively, or additionally, the surface resistivity of the conductive layers may be determined by means of the specific mixture of the conductive compound.

According to one embodiment each region of conductive compound has a thickness in the range 500 nm to 5 µm.

According to one embodiment the non-impregnable film is a polymer film.

According to one embodiment the conductive compound is a conductive ink.

According to one embodiment the conductive compound has a sheet resistivity in the range10 Ohm per square to 10 000 Ohm per square.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically depicts a high voltage lead-through device;
Fig. 2 depicts a cross-section of a condenser core of the high voltage lead-through device in Fig. 1;
Fig. 3 schematically depicts a top view of a rolled-out non-impregnable film with regions with conducting compound, and
Fig. 4 depicts a flowchart for manufacturing a high voltage lead-through device such as the one depicted in Fig. 1.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

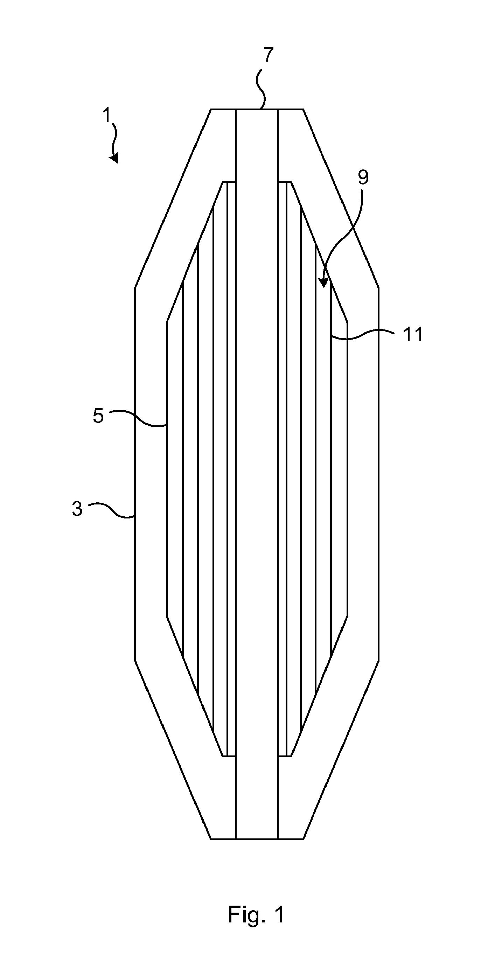

Fig. 1 depicts an example of a high voltage lead-through device 1. The high voltage lead-through device 1 comprises a condenser core 5 and a conductor 7. The condenser core 5 is arranged around the conductor 7. In particular, the condenser core 5 comprises a non-impregnable film 9 which is wound around the conductor 7-In case the high voltage lead-through device has a housing 3, the condenser core 5 is arranged within the housing 3.

The non-impregnable film 9 may for example be made of polymer e.g. a thermoplastic film, a pre-impregnated material such as a cellulose-based material e.g. paper, pre-impregnated fibreglass web, or glass. In particular, the non-impregnable film 9 should be made of a material or a material combination which is able to withstand high temperatures caused for example by the high currents flowing through the conductor 7 during use. The thickness of the non-impregnable film 9 may for example be in the range 10-250 µm.

In a plurality of regions, the non-impregnable film 9 is coated with a conductive compound 11, such as conductive ink or conductive polymer. Since the film 9 is non-impregnable, it cannot absorb the conductive compound 11. The conductive compound 11 is thus arranged on the surface, in a number of regions, of the non-impregnable film 9.

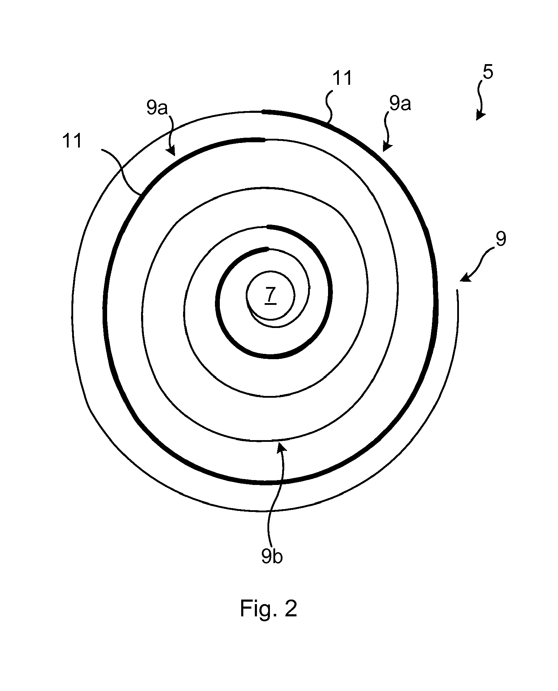

The regions coated with the conductive compound 11 define conductive regions of the non-impregnable film 9, whereas those regions which are not coated with the conductive compound 11 define electrically insulating regions of the non-impregnable film 9. The non-impregnable film 9 is wound around the conductor 7 and thus forms the condenser core 5, as shown in Fig. 2. Each region 9a which is coated with the conductive compound 11 defines a conductive layer of the condenser core 5 encircling the conductor 7 one turn, and each region 9b of the non-impregnable film 9 which is not coated with the conductive compound 11 defines one turn around the conductor 7 of an electrically insulating layer or several turns around the conductor 7 thus forming several electrically insulating layers.

As can be seen in Fig. 1, the non-impregnable film 9 wound around the conductor may have a shorter axial extension the further away a particular layer or turn is arranged from the centrally arranged conductor 7. To this end the regions of the non-impregnable film 9 coated with the conductive compound 11 also are shorter in the axial direction the further away they are to the conductor 7. It is also envisaged that the non-impregnable film alternatively could form a cylindrical condenser core body, with each subsequent conductive layer having a shorter axial extension the further out from the conductor. The particular dimension(s) of the regions are dependent of the particular application of the high voltage lead-through device.

The thickness of the conductive compound 11, i.e. the thickness of the coating, in any region in which it has been applied to the non-impregnable film 9 is preferably in the range 500 nm to 5 µm. According to one example, the thickness of the conductive compound 11 is in the range 1100 nm to 4 µm. The thickness of the conductive compound 11 is thus thicker than that of a metallized layer generally obtainable by means of vapour deposition and thinner than what would be possible by means of a foil such as aluminium foil.

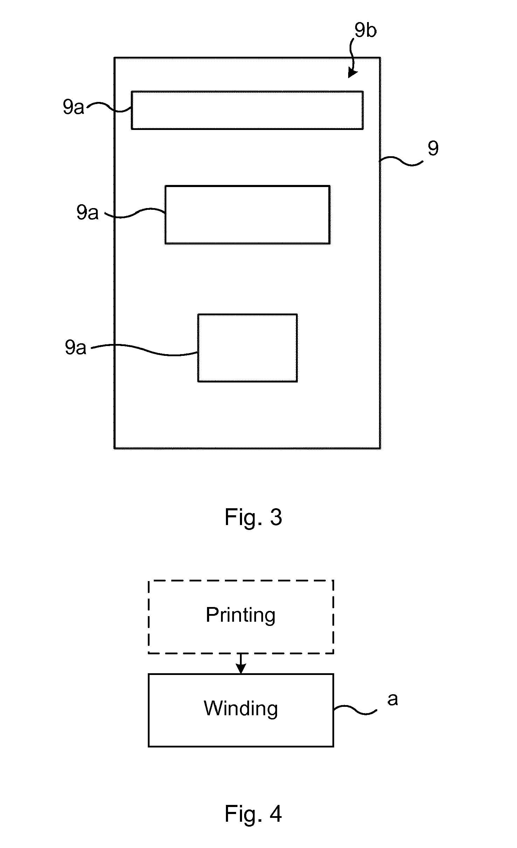

Fig. 3 shows a top view of a rolled-out non-impregnable film 9. A number of regions 9a are coated with the conductive compound 11. It should be noted that example in Fig. 3 is a simplified schematic illustration of a non-impregnable film coated with a conductive compound 11, intended to illustrate the general layout of the regions 9a, and a non-impregnable film may thus comprise more or fewer regions. In Fig. 3, the uppermost region defines the innermost conductive layer and the lowermost region defines the outermost conductive layer when the non-impregnable film 9 has been rolled around conductor 7 to obtain condenser core 5 of a high voltage lead-through device.

Fig. 4 is a flow chart explaining a method of manufacturing the high voltage lead-through device 1. The non-impregnable film 9 may either already be pre-prepared with the regions of conductive compound 11 when the high voltage lead-through device 1 is being assembled, or the non-impregnable film 9 may be provided with the regions of conductive compound 11 during assembly of the high voltage lead-through device 1. In either case, in a step a) the non-impregnable film 9 comprising the regions of conductive compound 11 is wound around the conductor 7 to obtain the condenser core 5.

According to one variation of the high voltage lead-through device, an outermost conductive layer of the condenser core has a lower surface resistivity than an innermost conductive layer of the condenser core. Thus, each conductive layer may have individually adapted surface resistivity, for example by different thickness of the conductive compound applied to the regions 9a.

The conductive compound 11 is applied to the surface of the non-impregnable film 9 by means of printing by means of a printing device. Such printing technology may for example be based on screen-printing, ink jet printing, intermittent web coating or slot die coating. The printing may either be performed while the high voltage lead-through device is being assembled, i.e. during winding of the non-impregnable film 9 around the conductor 7 or prior to assembly.

While the conductive compound 11 is printed onto the non-impregnable film, according to one variation of the method, an outermost conductive layer of the condenser core is provided with a lower surface resistivity than an innermost conductive layer of the condenser core. This may for example be achieved by varying the thickness of the coating, i.e. of the conductive compound applied to the non-impregnable film 9 by means of printing.

In case the printing is performed while the high voltage lead-through device is being assembled, printing may be performed while winding the non-impregnable film around the conductor 7. Printing onto the non-impregnable film 9 may thus for example be performed as it is unwound from a core and wound around the conductor 7.

According to one variation, the conductive compound may first be printed onto a first non-impregnable film, for example one first non-impregnable film for each such region, which in turn is/are laminated with the non-impregnable film 9. According to this example, the conductive compound is thus not directly printed onto the non-impregnable film 9. Instead first non-impregnable films coated with the conductive compound are laminated with the main non-impregnable film which is to be rolled around the conductor 7 to form a condenser core 5.

When the condenser core 5 has been obtained by means of winding the non-impregnable foil around the conductor 7, a housing may be arranged around the condenser core 5, and a flange may be a arranged on the housing. It should however be noted that there may be embodiments which do not have a housing. Furthermore, sheds may be arranged on the housing or directly on the condenser core body to increase the creepage path of the high voltage lead-through device. The flange and/or the outermost conductive layer of the condenser core are typically connected to the same electric potential as the electric potential of the medium through which the high voltage lead-through device extends when the high voltage lead-through device is installed for use.

By means of printing technology, high precision in positioning of the regions coated with conductive compound may be obtained. Furthermore, depending on the specific conductive compound it would be more economical to manufacture a high voltage lead-through device in this manner. Moreover, the conductivity of the conductive compound 11, and thus of the conductive layers formed thereby, may be tuned while designing the high voltage lead-through device by choosing suitable a conductive compound, and by the thickness of the conductive compound printed onto the non-impregnable film. The surface resistivity of the conductive compound 11 may for example be in the range10 Ohm per square to 10 000 Ohm per square, preferably in the range 10 Ohm per square to 1000 Ohm per square. The former range corresponds to a conductivity in the range 10⁻⁴ Siemens to 0.1 Siemens, while the latter correspond to a conductivity range of 10⁻³ to 0.1 Siemens. The conductivity is thus lower than for aluminium foil and metallization obtained by means of vapour deposition, and this may be advantageous when the lead-through device is subjected to transients, and which could damage the lead-through device.

Furthermore, by utilising a non-impregnable film made of for example a polymer film, good adhesion of the conductive compound to the non-impregnable film may be obtained.

The high voltage lead-through device may be utilised in high voltage DC applications or high voltage AC applications. The high voltage lead-through device may for example be a bushing, a cable termination or an instrument transformer.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A high voltage lead-through device (1) comprising:
a conductor (7), and
a non-impregnable film (9) wound around the conductor (7) thus forming a condenser core (5), wherein the non-impregnable film has a surface comprising a plurality of regions (9a) provided with a conductive compound (11), wherein each region (9a) provided with the conductive compound (11) forms a respective conductive layer of the condenser core (5).

2. The high voltage lead-through device (1) as claimed in claim 1, wherein an outermost conductive layer of the condenser core (5) has a lower surface resistivity than an innermost conductive layer of the condenser core (5).

3. The high voltage lead-through (1) device as claimed in claim 1 or 2, wherein each region (9a) of conductive compound (11) has a thickness in the range 500 nm to 5 µm.

4. The high voltage lead-through device as claimed in any of the preceding claims, wherein the non-impregnable film (9) is a polymer film.

5. The high voltage lead-through device (1) as claimed in any of the preceding claims, wherein the conductive compound (11) is a conductive ink.

6. The high voltage lead-through device (1) as claimed in any of the preceding claims, wherein the conductive compound (11) has a sheet resistivity in the range 10 Ohm per square to 10 000 Ohm per square.

7. The high voltage lead-through device (1) as claimed in any of the preceding claims, wherein the high voltage lead-through device (1) is one of a bushing, a cable termination and an instrument transformer.

8. A method of manufacturing a high voltage lead-through device, wherein the method comprises:
b) winding a non-impregnable film (9) around a conductor (7), the non-impregnable film (9) having a surface comprising a plurality of regions (9a) provided with a conductive compound (11), forming a plurality of conductive layers when the non-impregnable film (9) has been wound around the conductor (7) to obtain a condenser core (5).

9. The method as claimed in claim 8, comprising printing the conductive compound (11) onto the non-impregnable film (9).

10. The method as claimed in claim 8 or 9, wherein an outermost conductive layer of the condenser core (5) has a lower surface resistivity than an innermost conductive layer of the condenser core (5).

11. The method as claimed in claim 9 or 10, wherein the conductive compound (11) is printed onto the non-impregnable film (9) during step a) of winding.

12. The method as claimed in any of claims 8-11, wherein each region (9a) of conductive compound (11) has a thickness in the range 500 nm to 5 µm.

13. The method as claimed in any of claims 8-12, wherein the non-impregnable film (9) is a polymer film.

14. The method as claimed in any of claims 8-13, wherein the conductive compound (11) is a conductive ink.

15. The method as claimed in any of claims 8-14, wherein the conductive compound (11) has a surface resistivity in the range 10 Ohm per square to 10 000 Ohm per square.
